# FASCICULE DE BREVET EUROPEEN

(11) **EP 2 107 263 B1**
(45) Date de publication et mention de la délivrance du brevet: **20.10.2010**
(21) Numéro de dépôt: 09157143.0
(22) Date de dépôt: 02.04.2009
(51) Int. Cl.: F16D 48/06

(54) **Procédé de détermination automatique du point de léchage d'un embrayage par apprentissage**
Verfahren zur automatischen Bestimmung des Schleifpunktes einer Kupplung durch Lernen
Method for automatically determining the biting point of a clutch by teach programming

(30) Priorité: 04.04.2008 FR 0852284
(43) Date de publication de la demande: 07.10.2009
(73) Titulaire: Peugeot Citroën Automobiles SA, 78140 Vélizy-Villacoublay (FR)
(72) Inventeur: Rocq, Gaëtan, 78125, LA BOISSIERE-ECOLE (FR); Launay, Cédric, 78680, EPONE (FR)

(56) Documents cités:
- WO-A-2008/041620
- WO-A-2008/064633
- FR-A- 2 791 749
- FR-A- 2 887 606
- US-A1- 2006 089 232
- US-A1- 2007 275 823

## Description

### Domaine technique

L'invention concerne un procédé de détermination du point de léchage d'un embrayage par apprentissage sur un véhicule hybride. L'invention a pour but notamment de faciliter la détermination du point de léchage de l'embrayage assurant le couplage et le découplage entre un moteur thermique et une machine électrique. L'invention trouve une application particulièrement avantageuse dans le domaine des véhicules automobiles, notamment les véhicules de type hybride.

### Etat de la technique

Un véhicule hybride exploite deux types d'énergie, une énergie thermique et une énergie électrique dont la combinaison permet de garantir la traction du véhicule, tout en optimisant le rendement énergétique. Le véhicule hybride permet ainsi de diminuer la consommation en carburant du véhicule et du même coup la pollution.

On connaît les véhicules hybrides de type parallèle qui comportent un moteur thermique et une machine électrique reliés entre eux par l'intermédiaire d'un embrayage.

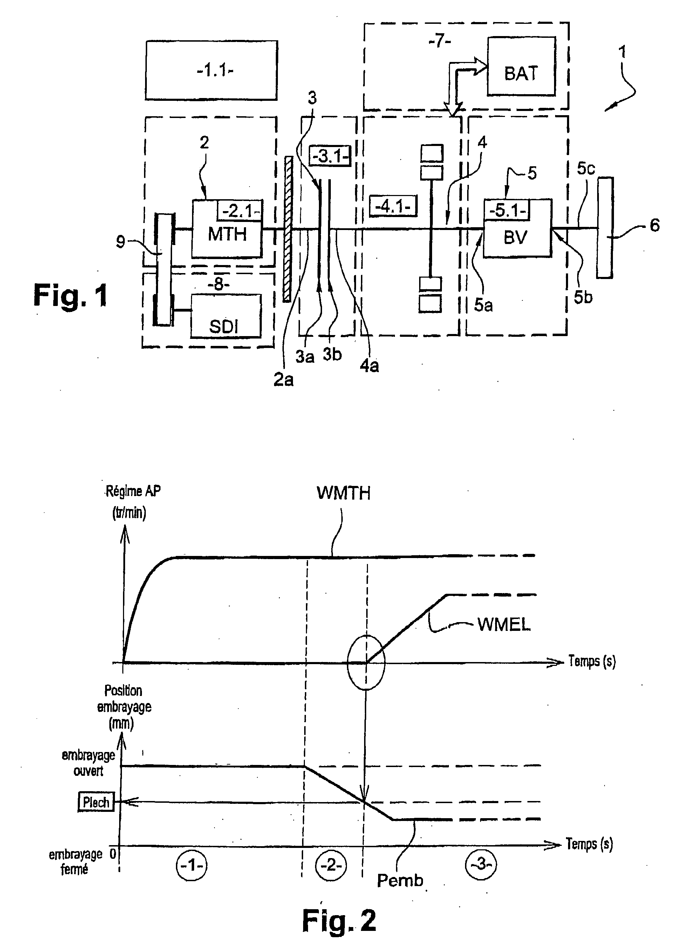

L'architecture d'un tel véhicule est illustrée sur la figure 1 qui montre un dispositif 1 de transmission comportant un moteur thermique 2, un embrayage 3, une machine électrique 4, une boîte de vitesses 5, et des roues 6 formant une chaîne de traction.

Plus précisément, l'embrayage 3 comporte un premier et un deuxième disque 3a et 3b d'embrayage. Le premier disque 3a est relié à un arbre 2a du moteur thermique 2. Et le deuxième disque 3b est relié à un arbre 4a de la machine électrique 4. En outre, l'arbre 4a de la machine électrique 4 et un arbre 5c des roues 6 sont reliés respectivement à une entrée 5a et à une sortie 5b de la boîte de vitesses 5.

Le moteur thermique 2, est démarré par l'intermédiaire d'un système 8 de démarrage indépendant qui lui est relié par l'intermédiaire d'une courroie.

Le dispositif 1 de transmission est susceptible de fonctionner dans deux modes de fonctionnement. Dans un mode électrique, seule la machine électrique 4 fournit du couple aux roues. L'embrayage 3 reste alors ouvert de sorte que l'arbre 2a du moteur thermique 2 et l'arbre 4a de la machine électrique 4 sont désaccouplés l'un de l'autre. Dans ce mode, la machine électrique 4 prélève de l'énergie au système de stockage d'énergie 7 tel qu'une batterie, et fonctionne en mode moteur.

Dans le mode hybride, l'arbre 5c des roues 6 est entraîné à la fois par le moteur thermique 2 et la machine 4. L'embrayage 3 est alors fermé, de sorte que l'arbre 2a du moteur thermique 2 et l'arbre 5c des roues 6 sont accouplés entre eux. Dans ce mode, la machine 4 fonctionne soit en mode moteur pour transmettre du couple aux roues 6 en parallèle du couple fourni par le moteur thermique afin d'ajuster le couple appliqué aux roues, soit en mode générateur afin de recharger la batterie 7, la machine étant alors entrainée par le moteur thermique 2.

Dans les deux modes, dans la phase de freinage, la machine électrique fonctionne en génératrice de manière à transformer l'énergie cinétique du véhicule en énergie électrique pour la batterie.

Chaque organe 2 à 5 est commandé par un calculateur de contrôle propre 2.1, 3.1, 4.1, 5.1. Ces calculateurs de contrôle 2.1, 3.1, 4.1, 5.1 sont eux-mêmes contrôlés par un calculateur unique 1.1 dit de supervision. Ce calculateur de supervision 1.1 est apte à synchroniser les actionnements des différents organes 2 à 5 afin de répondre à la volonté du conducteur.

L'ensemble des calculateurs de contrôle 2.1, 3.1, 4.1, 5.1 est apte à piloter la chaîne de traction du véhicule (augmenter ou diminuer la vitesse du moteur thermique 2 et/ou de la machine électrique 4) et sélectionner un mode de roulage du véhicule (mode urbain, mode économique, mode non polluant, mode sportif...), en fonction des différentes situations de vie et de l'état du véhicule. Le calculateur de supervision 1.1 est également apte à coordonner toutes les phases transitoires et choisit les points de fonctionnement de la machine électrique 4 et du moteur thermique 3 afin notamment d'optimiser la consommation en carburant.

Un point de léchage permet de recaler la fonction de transfert entre la position d'un actionneur de l'embrayage 3 et le couple transmis par cet embrayage 3 et ainsi maîtriser ledit couple transmis par l'embrayage 3.

Dans l'état de la technique, un apprentissage et un recalage du point de léchage Plech d'une chaîne de traction avec une boîte de vitesse manuelle pilotée ou hybride est réalisé avec le moteur thermique 2 tournant, boîte de vitesse 5 au neutre et par détection de la mise en rotation de l'arbre primaire.

Cet apprentissage est mis en oeuvre par un procédé qui permet de déterminer ce point de léchage Plech. Ce procédé consiste à démarrer le moteur thermique 2, dans un premier temps de laisser l'embrayage 3 ouvert et de réguler le régime WMTH du moteur thermique 2 vers une consigne donnée WconsMTH.

Une fois que le régime WMTH du moteur thermique 2 est stabilisé, une fermeture progressive de l'embrayage 3 est réalisée. Cette fermeture progressive permet de transmettre un couple faible à la machine électrique 4 pour que cette dernière monte vers un régime nominal.

Dès qu'une différence entre le régime WMEL de la machine électrique et le régime nominal est supérieure à une valeur seuil calibrable, on mémorise la position Pemb de l'actionneur d'embrayage 3 pour en déduire le point de léchage Plech de l'embrayage.

Certes, cette détermination du point de léchage Plech présente l'avantage d'être simple, cependant, elle pose un problème de précision de l'apprentissage du point de léchage Plech dans le cas des véhicules hybrides. En effet, dans l'architecture hybride présentée à la figure 1, la machine électrique 4 étant mécaniquement liée à l'arbre primaire, elle apporte une inertie importante ainsi que des frottements non linéaires.

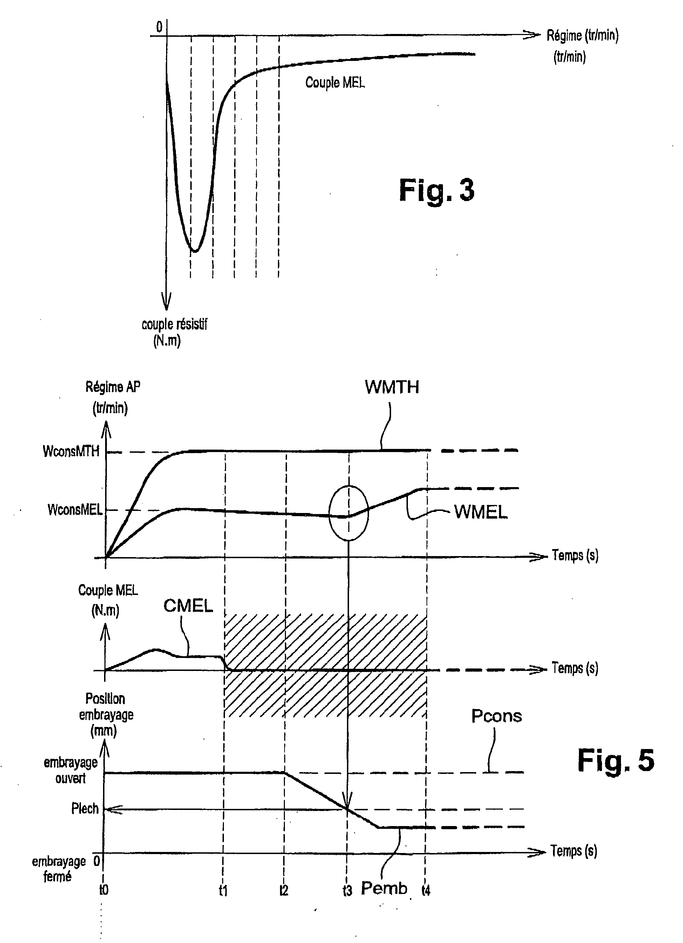

Dès lors, comme le montre la figure 3, il est beaucoup plus difficile de mettre en rotation l'arbre primaire de la boîte de vitesse 5 et donc de détecter un couple faible transmit par l'embrayage. De plus, la non linéarité des frottements de la machine électrique 4 à régime faible, entraîne de la dispersion sur la mesure du point de léchage Plech.

### Exposé de l'invention

La présente invention comble ce besoin en proposant un procédé de détermination du point de léchage d'un système d'embrayage par apprentissage, dans lequel :
- on vérifie que le moteur thermique est démarré et que l'embrayage est ouvert,
- on régule le régime du moteur thermique, vers un régime de consigne,
- on régule le régime de la machine électrique vers un régime de consigne,
- on régule le couple de la machine électrique vers une valeur nulle, lorsque la machine électrique a atteint son régime de consigne,
- on mémorise la décélération du régime de la machine électrique,
- on ferme progressivement l'embrayage, de sorte qu'un couple résistif est transmis par l'embrayage à la machine électrique pour perturber l'évolution de son régime, et
- on mémorise la position de l'actionneur de l'embrayage, correspondant au point de léchage dès qu'une valeur de la décélération de la machine électrique est supérieure à une valeur seuil.

Dans ce contexte, l'invention permet un apprentissage et un recalage du point de léchage du système d'embrayage plus précis au moyen de l'utilisation de la machine électrique dans une zone de comportement linéaire du véhicule hybride. L'invention permet de garantir une prestation constante du contrôle en couple de l'embrayage et donc de la chaîne de traction hybride sur la durée de vie du véhicule. Cette invention permet d'effectuer un apprentissage et/ou un recalage du point de léchage de l'embrayage précis afin de garantir une maîtrise du couple.

Plus précisément, l'invention a pour objet un procédé de détermination du point de léchage d'un embrayage d'un véhicule de type hybride au démarrage de celui-ci ledit véhicule comportant un moteur thermique et une machine électrique couplés entre eux par l'intermédiaire de l'embrayage **caractérisé en ce qu**'il comporte les étapes suivantes,
- on vérifie que le moteur thermique est démarré et que l'embrayage est ouvert,
- on régule le régime du moteur thermique, vers un régime de consigne,
- on régule le régime de la machine électrique, vers un régime de consigne,
- on régule le couple de la machine électrique vers une valeur nulle, lorsque la machine électrique a atteint son régime de consigne,
- on mémorise la décélération du régime de la machine électrique,
- on ferme progressivement l'embrayage, de sorte qu'un couple résistif est transmis par l'embrayage à la machine électrique pour perturber son régime, et
- on mémorise la position de l'actionneur de l'embrayage, correspondant au point de léchage dès qu'une variation de la décélération de la machine électrique est supérieure à une valeur seuil.

L'invention comporte l'une quelconque des caractéristiques suivantes :
- l'embrayage demeure ouvert au moins jusqu'à ce que l'on ait atteint le régime de consigne de la machine électrique et que son couple soit nul,
- la fermeture de l'embrayage s'effectue une fois que le régime de la machine électrique est stabilisé à son régime de consigne,
- la valeur seuil est calibrable,
- on détermine la position de l'actionneur de l'embrayage au moyen d'un capteur de position,
- une fois que le point de léchage est déterminé, l'embrayage est ré-ouvert.

### Brèves description des dessins

L'invention sera mieux comprise à la lecture de la description qui suit et à l'examen des figures qui l'accompagnent. Celles-ci sont présentées à titre indicatif et nullement limitatif de l'invention.
La figure 1 (déjà décrite) représente schématiquement un dispositif de transmission utilisé avec le procédé selon l'invention ;
La figure 2 (déjà décrite) montre des chronogrammes de signaux observables sur les différents organes 2 à 4 du dispositif de la figure 1, lors de la mise en oeuvre du procédé de l'art antérieur ;
La figure 3 (déjà décrite) montre une courbe du couple résistif de la machine électrique en fonction de son régime, selon le procédé de l'art antérieur ;

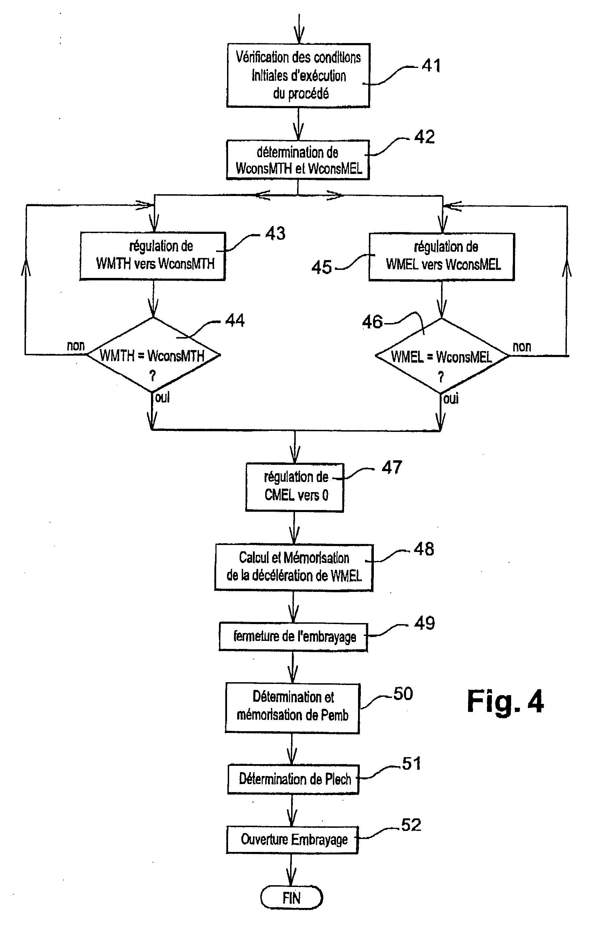

La figure 4 représente un diagramme fonctionnel des différentes étapes du procédé selon l'invention ;
La figure 5 montre des chronogrammes de signaux observables sur les différents organes 2 à 4 du dispositif de la figure 1 lors de la mise en oeuvre du procédé de l'invention.

### Description détaillée de modes de réalisation de l'invention

Les caractéristiques décrites et d'autres caractéristiques de l'invention résultent de la description suivante des modes de réalisations préférés.

Chaque véhicule hybride comporte un dispositif 1 de transmission de couple aux roues 6 comprenant des organes 2-5 et 7-8 tels qu'illustrés à la figure 1. Chacun des organes 2-5 est associé respectivement à un calculateur de contrôle 2.1, 3.1, 4.1, 5.1 et au moins à un capteur (non représenté). Un calculateur de contrôle 2.1, 3.1, 4.1, 5.1 est destiné à piloter l'organe 2-5 auquel il est associé.

Chaque calculateur de contrôle 2.1, 3.1, 4.1, 5.1 est apte à recevoir des données provenant des capteurs de l'organe 2-5 et 7-8 respectif associé. Tous les calculateurs 2.1, 3.1, 4.1, 5.1 sont commandés par un calculateur de supervision 1.1 qui a pour tâche d'harmoniser le fonctionnement des organes 2-5, de manière à pouvoir prendre des décisions et à synchroniser les actions des calculateurs 2.1, 3.1, 4.1, 5.1 pour répondre à la volonté d'un conducteur. Les calculateurs de contrôle 2.1, 3.1, 4.1, 5.1 et le calculateur de supervision 1.1 comportent chacun notamment, une mémoire programme, une mémoire de données connectées toutes deux à un microprocesseur.

Dans la description, on prête des actions aux calculateurs 1.1, 2.1, 3.1, 4.1, 5.1 et aux programmes qu'ils exécutent, cela signifie que ces actions sont commandées par les microprocesseurs des calculateurs comportant lesdits programmes, lesdits microprocesseurs étant alors commandés par les codes d'instruction enregistrés dans les mémoires des calculateurs. Ces codes d'instruction permettent de commander les organes reliés aux calculateurs et donc de réaliser l'action entreprise.

La figure 2 est un exemple de diagramme fonctionnel du procédé selon l'invention. Ce diagramme montre une étape préliminaire 41 dans laquelle le calculateur de supervision 1.1 effectue des étapes de vérification des conditions initiales, selon le procédé de l'invention.

Ainsi, dans une première étape de vérification, le calculateur de supervision 1.1 envoie une requête d'interrogation sur l'état de fonctionnement du moteur thermique 2 au calculateur de contrôle 2.1 associé à ce moteur 2. Ledit calculateur de contrôle 2.1 détermine au moyen de capteurs du moteur 2, si ce dernier est à l'arrêt.

Si le moteur 2 est à l'arrêt, le calculateur de contrôle 2.1 du moteur 2 renvoie, par exemple, la valeur 0 au calculateur de supervision 1.1, sinon la valeur 1.

Dans une deuxième étape de vérification, le calculateur de supervision 1.1 envoie une requête d'interrogation sur l'état de fonctionnement de l'embrayage 3 au calculateur de contrôle 3.1 associé à cet embrayage 3. Ledit calculateur de contrôle 3.1 détermine au moyens de capteurs de position (non représenté) de l'embrayage 3, si ce dernier est ouvert. Si l'embrayage est ouvert, le calculateur de contrôle 3.1 de l'embrayage 3 renvoie, par exemple, la valeur 1 au calculateur de supervision 1.1, le calculateur de contrôle 3.1 renvoyant la valeur 0 dans les autres cas.

Dans une troisième étape de vérification, le calculateur de supervision 1.1, le calculateur envoie une requête d'interrogation sur l'état de fonctionnement de la boite de vitesse 5 au calculateur de contrôle 5.1 associé à cette boite de vitesse 5. Ledit calculateur de contrôle 5.1 détermine au moyens de capteurs de la boîte de vitesse, si ce dernier est au neutre. Si la boite de vitesse 5 est au neutre, le calculateur de contrôle 5.1 renvoie, par exemple, la valeur 0 au calculateur de supervision 1.1, sinon la valeur 1.

Lorsque la première, la deuxième et la troisième étape de vérification sont validées, on passe à l'étape 42.

Dans cette étape 42, le calculateur de supervision 1.1 détermine un régime de consigne pour le moteur thermique 2 et un régime de consigne pour la machine électrique 4 correspondant respectivement à WconsMTH et WconsMEL. Ces régimes de consigne WconsMTH et WconsMEL peuvent être stockés dans la mémoire de données du calculateur de supervision 1.1. Ils peuvent être également stockés dans la mémoire de données des calculateurs de contrôle respectifs 2.1 et 4.1 associé au moteur thermique 2 et à la machine électrique 4.

Ensuite, à l'étape 43, le calculateur de contrôle 2.1 associé au moteur thermique 2 régule le régime WMTH de celui-ci à la consigne WconsMTH émit par le calculateur de supervision 1.1.

Dans l'étape 44, le calculateur de supervision 1.1 vérifie que le régime WMTH du moteur thermique 2 soit égal à la consigne WconsMTH.

Lors d'une étape 45, le calculateur de contrôle 4.1 associé à la machine électrique 4 régule le régime WMEL de celle-ci à la consigne WconsMEL émit par le calculateur de supervision 1.1.

Dans l'étape 46, le calculateur de supervision 1.1 vérifie que le régime WMEL de la machine électrique 4 soit égal à la consigne WconsMEL.

Lors d'une étape 47, le calculateur de supervision 1.1 diminue le couple CMEL de la machine électrique 4 vers la valeur de consigne CconsMEL nulle. Lorsque le couple CMEL de la machine électrique 4 présente une valeur nulle, la machine électrique 4 décélère à l'instant t1.

Lors d'une étape 48, le calculateur de supervision 1.1 détermine et mémorise la décélération naturelle du régime WMEL de la machine électrique 4.

Lors d'une étape 49, le calculateur de supervision 1.1 effectue une fermeture progressive de l'embrayage 3 à l'instant t2, afin de transmettre un couple résistif à la machine électrique 4. Ce couple résistif a pour but de perturber le régime WMEL de la machine électrique 4 de l'étape 46.

Lors d'une étape 50, le calculateur de supervision 1.1 détermine, à partir des données mémorisées de décélération du régime WMEL de la machine électrique 4, la différence entre les deux dernières données successives enregistrées. A l'instant t3, cette différence est supérieure à un seuil qui est calibrable. Le calculateur de supervision 1.1 détermine à l'instant t3 la position Pemb de l'embrayage 3 fournie par un capteur de position de l'embrayage 3 et la mémorise.

Lors de l'étape 51, le calculateur de supervision 1.1 détermine un point de léchage Plech à partir de la position Pemb à l'instant t3 de l'embrayage 3.

Lors de l'étape 52, le calculateur de supervision 1.1 effectue une ouverture de l'embrayage 3, pour finir la procédure d'apprentissage.

On comprend de ce qui précède que le procédé est réitéré autant de fois qu'un opérateur, par exemple un garagiste, ou un conducteur le juge nécessaire pour recaler le point de léchage Plech de l'embrayage 3.

La figure 5 montre des chronogrammes de signaux observables sur les différents organes 2 à 4 du dispositif de la figure 1 lors de la mise en oeuvre du procédé de l'invention. Ces signaux sont observables lorsqu'une procédure d'apprentissage est demandée.

Plus précisément, la figure 5 montre les signaux du régime WMTH observable du moteur thermique 2, du régime WMEL observable de la machine électrique 4, le signal de couple CMEL de la machine électrique 4 et le signal correspondant à la position Pemb de l'actionneur de l'embrayage 3.

La figure 5 montre également l'évolution dans le temps des consignes des régimes WconsMTH et WconsMEL respectivement du moteur thermique 2 et de la machine électrique 4, ainsi que la consigne de la position Pcons de l'actionneur de l'embrayage 3. Les signaux définis précédemment sont émis respectivement par un capteur de régime du moteur thermique 2, un capteur de régime de la machine électrique 4, un capteur ou estimateur de couple de la machine électrique 4 et un capteur de position de l'actionneur de l'embrayage 3.

A l'instant t0, le véhicule est à l'arrêt. La machine électrique 4 et le moteur thermique 2 possèdent tous deux une vitesse nulle. A l'instant t0, le conducteur ou l'opérateur démarre le véhicule hybride.

Entre les instants t0 et t1, le régime WMTH du moteur thermique 2 et le régime WMEL de la machine électrique 4 augmentent de manière exponentielle, si bien qu'à l'instant t1, le régime WMTH s'est stabilisé autour d'une valeur WconsMTH correspondant à une consigne de régime du moteur thermique 2 et le régime WMEL s'est stabilisé autour d'une valeur WconsMEL correspondant à une consigne de régime de la machine électrique 4.

Par ailleurs, entre les instants t0 et t1, le signal de couple CMEL de la machine électrique 4 augmente linéairement durant la monté en régime de la machine électrique 4 jusqu'à ce que ledit régime WMEL se stabilise autour de WconsMEL. Lorsque le régime WMEL de la machine électrique 4 a atteint la valeur de consigne WconsMEL, le signal du couple CMEL de la machine électrique 4 est régulé avec une consigne de couple CconsMEL nulle.

Entre les instants t0 et t1, l'embrayage 3 reste ouvert à son maximum.

A l'instant t1, le couple CMEL de la machine électrique 4 est nul provoquant une décélération de la machine électrique 4.

Entre les instants t1 et t2, la décélération naturelle du régime WMEL de la machine électrique 4 est progressive.

A l'instant t2, une fermeture progressive de l'embrayage 3 est effectuée.

Entre les instants t2 et t3, la fermeture progressive de l'embrayage 3 entraîne la transmission du couple CMEL du moteur thermique 2 perturbant ainsi le régime WMEL de la machine électrique 4. A l'instant t3, une variation du régime WMEL de la machine électrique 4 est détectée comme étant supérieure à une valeur seuil.

À l'instant t3, on détermine puis mémorise la position Pemb de l'actionneur de l'embrayage 3, et on détermine le point de léchage Plech.

Entre les instants t3 et t4, l'embrayage 3 continue à se fermer progressivement, et la machine électrique 4 accélère.

Cette fermeture de l'embrayage 3, entraine à l'instant t4 une stabilisation du régime WMEL de la machine électrique 4.

## Revendications

1. Procédé de détermination du point de léchage (Plech) d'un embrayage (3) d'un véhicule de type hybride au démarrage de celui-ci ledit véhicule comportant un moteur thermique (2) et une machine électrique (4) couplés entre eux par l'intermédiaire de l'embrayage (3) **caractérisé en ce qu'**il comporte les étapes suivantes,
- on vérifie que le moteur thermique (2) est démarré et que l'embrayage (3) est ouvert,
- on régule le régime (WMTH) du moteur thermique (2), vers un régime de consigne,
- on régule le régime (WMEL) de la machine électrique (4), vers un régime de consigne (WconsMTH),
- on régule le couple (CMEL) de la machine électrique (4) vers une valeur nulle, lorsque la machine électrique (4) a atteint son régime de consigne (WconsMEL),
- on mémorise la décélération du régime (WMEL) de la machine électrique (4),
- on ferme progressivement l'embrayage (3), de sorte qu'un couple résistif est transmis par l'embrayage (3) à la machine électrique (4) pour perturber son régime (WMEL), et
- on mémorise la position (Pemb) de l'actionneur de l'embrayage (3), correspondant au point de léchage (Plech) dès qu'une variation de la décélération de la machine électrique (4) est supérieure à une valeur seuil.

2. Procédé selon la revendication 1, **caractérisé en ce que** l'embrayage (3) demeure ouvert au moins jusqu'à ce que l'on ait atteint le régime de consigne WconsMEL de la machine électrique (4) et que son couple (WMEL) soit nulle.

3. Procédé selon la revendication 1 ou 2, **caractérisé en ce que** la fermeture de l'embrayage (3) s'effectue une fois que le régime (WMEL) de la machine électrique (4) est stabilisé à son régime de consigne (WconsMEL).

4. Procédé selon l'une des revendications 1 à 3, **caractérisé en ce que** la valeur seuil est calibrable.

5. Procédé selon l'une des revendications 1 à 4, **caractérisé en ce qu'**on détermine la position (Pemb) de l'actionneur de l'embrayage (3) au moyen d'un capteur de position.

6. Procédé selon l'une des revendications 1 à 5, **caractérisé en ce que** une fois que le point de léchage (Plech) est déterminé, l'embrayage (3) est ré-ouvert.

## Claims

1. Method for determining the biting point (Pbite) of a clutch (3) of a vehicle of the hybrid type on starting of the latter, the said vehicle comprising a heat engine (2) and an electrical machine (4) coupled with each other via the clutch (3), **characterized in that** it comprises the following stages,
- it is verified that the heat engine (2) has started up and that the clutch (3) is open,
- the speed (WMTH) of the heat engine (2) is regulated towards a setpoint speed,
- the speed (WMEL) of the electrical machine (4) is regulated towards a setpoint speed (WsetMTH),
- the torque (CMEL) of the electrical machine (4) is regulated towards a zero value, when the electrical machine (4) has reached its setpoint speed (WsetMEL),
- the deceleration of the speed (WMEL) of the electrical machine (4) is stored,
- the clutch (3) is closed progressively, such that a resistive torque is transmitted by the clutch (3) to the electrical machine (4) to disrupt its speed (WMEL), and
- the position (Pemb) of the actuator of the clutch (3) is stored, corresponding to the biting point (Pbite) as soon as a variation of the deceleration of the electrical machine (4) is greater than a threshold value.

2. Method according to Claim 1, **characterized in that** the clutch (3) remains open at least until one has reached the setpoint speed WsetMEL of the electrical machine (4) and its torque (WMEL) is zero.

3. Method according to Claim 1 or 2, **characterized in that** the closing of the clutch (3) is carried out once the speed (WMEL) of the electrical machine (4) is stabilized at its setpoint speed (WsetMEL).

4. Method according to one of Claims 1 to 3, **characterized in that** the threshold value is able to be calibrated.

5. Method according to one of Claims 1 to 4, **characterized in that** the position (Pclutch) of the actuator of the clutch (3) is determined by means of a position sensor.

6. Method according to one of Claims 1 to 5, **characterized in that** once the biting point (Pbite) is determined, the clutch (3) is re-opened.

## Patentansprüche

1. Verfahren zum Bestimmen des Schleifpunkts (Plech) einer Kupplung (3) eines Hybridfahrzeugs bei dessen Starten, wobei das Fahrzeug einen Verbrennungsmotor (2) und eine Elektromaschine (4) aufweist, die miteinander anhand der Kupplung (3) gekuppelt sind, **dadurch gekennzeichnet, dass** es die folgenden Schritte aufweist:
- man prüft, dass der Verbrennungsmotor (2) gestartet ist, und dass die Kupplung (3) offen ist,
- man regelt die Drehzahl (WMTH) des Verbrennungsmotors (2) zu einer Solldrehzahl,
- man regelt die Drehzahl (WMEL) der Elektromaschine (4) zu einer Solldrehzahl (WconsMTH),
- man regelt das Moment (CMEL) der Elektromaschine (4) zu einem Wert null, wenn die Elektromaschine (4) ihre Solldrehzahl (WconsMEL) erreicht hat,
- man regelt das Langsamerwerden der Drehzahl (WMEL) der Elektromaschine (4),
- man schließt allmählich die Kupplung (3), so dass von der Kupplung (3) an die Elektromaschine (4) zum Stören ihrer Drehzahl (WMEL) ein Widerstandsmoment übertragen wird, und
- man speichert die Position (Pemb) des Stellantriebs der Kupplung (3), die dem Schleifpunkt (Plech) entspricht, sobald eine Variation der Verlangsamung der Elektromaschine (4) größer ist als ein Schwellenwert.

2. Verfahren nach Anspruch 1, **dadurch gekennzeichnet, dass** die Kupplung (3) mindestens offen bleibt, bis man die Solldrehzahl WconsMEL der Elektromaschine (4) erreicht hat und ihr Moment (WMEL) gleich null ist.

3. Verfahren nach Anspruch 1 oder 2, **dadurch gekennzeichnet, dass** das Schließen der Kupplung (3) erfolgt, sobald die Drehzahl (WMEL) der Elektromaschine (4) auf ihre Solldrehzahl (WconsMEL) stabilisiert ist.

4. Verfahren nach einem der Ansprüche 1 bis 3, **dadurch gekennzeichnet, dass** der Schwellenwert kalibriert werden kann.

5. Verfahren nach einem der Ansprüche 1 bis 4, **dadurch gekennzeichnet, dass** man die Position (Pemb) des Stellantriebs der Kupplung (3) mit einem Positionssensor bestimmt.

6. Verfahren nach einem der Ansprüche 1 bis 5, **dadurch gekennzeichnet, dass** nach dem Bestimmen des Schleifpunkts (Plech) die Kupplung (3) wieder geöffnet wird.
